# FASCICULE DE BREVET EUROPEEN

(11) **EP 0 763 323 B1**
(45) Date de publication et mention de la délivrance du brevet: **08.12.1999**
(21) Numéro de dépôt: 96430012.3
(22) Date de dépôt: 11.09.1996
(51) Int. Cl.: A01G 17/08

(54) **Appareil pour la pose d'attaches, par exemple pour l'attachage de la vigne**
Vorrichtung für die Anlage von banden, zum Beispiel zur Anbindung der Weinrebe
Device for setting ties, for example for tying grapevine

(30) Priorité: 12.09.1995 FR 9510929
(43) Date de publication de la demande: 19.03.1997
(73) Titulaire: PELLENC (Société Anonyme), 84120 Pertuis (FR)
(72) Inventeur: Pellenc, Roger, 84120 Pertuis (FR); Montoya, José, 84530 Villelaure (FR); Gilbert, Philippe, 84120 Pertuis (FR)
(74) Mandataire: Marek, Pierre

(56) Documents cités:
- WO-A-93/14622
- AT-A- 346 639
- BE-A- 554 705
- FR-A- 1 504 378
- FR-A- 2 221 239
- FR-A- 2 317 052
- FR-A- 2 701 739
- NL-A- 8 302 801
- US-A- 3 810 495

## Description

La présente invention concerne un appareil pour la pose d'attaches ou pistolet attacheur. Selon une application très avantageuse, cet appareil peut être utilisé pour attacher des petites branches ou rameaux d'arbres, arbustes ou arbrisseaux sur des fils ou des piquets de soutien, tels que, par exemple, des sarments de vigne sur des fils de palissage. Toutefois, d'autres applications très intéressantes peuvent être envisagées telles que, par exemple, l'attachage de plantes sur des tuteurs, l'attachage de grillages de clôture sur des piquets, la fermeture de sacs, la liaison de fers d'armature de béton armé, etc.

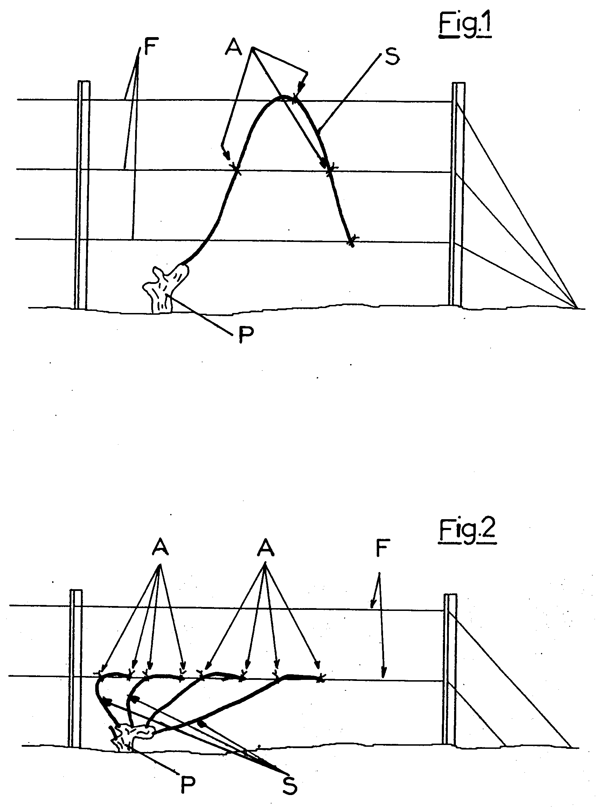

Dans le domaine viticole, l'attache de la vigne représente une opération longue et fastidieuse qui requiert beaucoup de main d'oeuvre. Selon les techniques de culture propres à chaque région viticole, il est en effet nécessaire, comme illustré par les figures 1 et 2 des dessins annexés, pour chaque pied de vigne P, d'attacher, chaque année, sur un ou trois fils de fer F agencés pour servir de supports et de guides, au moyen de deux à quatre attaches A pour chaque rameau, un à quatre sarments S qui porteront les fruits l'année suivante. Suivant la technique de culture considérée, il est ainsi nécessaire d'effectuer de 9 000 à 80 000 attachages par hectare.

Actuellement, cet attachage est effectué :
- soit avec de la ficelle nouée à la main ;
- soit avec des attaches de conformations diverses, posées manuellement ou à l'aide d'outils appropriés peu adaptés aux critères de maniabilité et de vitesse susceptibles d'apporter un réel gain de productivité.

On connait, par exemple, des appareils à ligaturer mettant en oeuvre un lien filiforme constitué d'un fil métallique de petit diamètre, enrobé de papier ou de matière plastique, et au moyen desquels une portion de ce lien est disposée autour d'un sarment et d'un fil de soutien, cette portion de lien étant ensuite coupée et ses deux extrémités sont torsadées ensemble pour réaliser une ligature.

L'invention se rattache aux appareils portatifs de ce genre.

De tels appareils sont, par exemple, décrits dans les documents FR-A-1.504.378, FR-A-2.221.239 et FR-A-2.701.739.

Les appareils décrits dans les documents FR-A-1.504.378 et FR-A-2.221.239 sont très rudimentaires ; ils ne comportent aucune motorisation et leur fonctionnement est exclusivement mécanique.

Dans ces conditions, ils n'apportent aucune amélioration significative des rendements, ni aucune diminution sensible des dépenses d'énergie musculaire requises pour l'exécution des travaux d'attache de la vigne ou de fixation des plantes arborescentes ou grimpantes sur des tuteurs.

L'appareil décrit dans le document FR-A-2.701.739 n'apporte pas un progrès déterminant par rapport aux dispositifs sommaires exposés dans les deux documents susmentionnés. Il s'agit, en effet, d'un appareil semi-automatique, c'est-à-dire d'un appareil effectuant seulement une partie de l'opération de ligaturage, de manière automatique et motorisée, cette opération s'opérant, d'autre part, par étapes successives nécessitant deux manoeuvres de fermeture manuelle des mâchoires dudit appareil, de sorte que le gain de temps obtenu pour attacher la vigne est assez médiocre, tandis que les opérations répétées de rapprochement des deux bras munis des mâchoires, entrainent rapidement une fatigue musculaire qui, au mieux, diminue les rendements ou, au pire, favorise l'apparition de tendinites.

D'autre part, la mise en oeuvre de cet appareil nécessite l'exécution de gestes précis et requiert, par conséquent, une certaine dextérité, de sorte que son utilisation semble réservée à des opérateurs expérimentés. Il faut considérer en effet, comme indiqué précédemment, que les vignerons sélectionnent, pour chaque pied de vigne, un, deux, trois ou quatre rameaux (suivant les modes de culture) qui porteront les fruits l'année suivante, tous les autres rameaux étant coupés. Il est donc essentiel de ne pas casser ou blesser les rameaux retenus pour la fructification.

En résumé, s'il existe actuellement des outils permettant d'effectuer un attachage mécanisé de la vigne, le temps nécessaire pour la pose d'une attache reste relativement long (au mieux, de l'ordre de 4 à 10 secondes), pour un opérateur expérimenté, et cela quels que soient les techniques et les matériels mis en oeuvre. Vu le nombre considérable d'attaches à réaliser, le coût de la main d'oeuvre affectée à cette tache est toujours très élevé.

Un objet de la présente invention est donc de remédier aux différents inconvénients découlant de cette situation.

Selon l'invention, cet objectif est atteint grâce à un appareil portatif ou pistolet attacheur utilisant un lien filiforme, cet appareil comprenant : - des moyens pour l'entraînement d'une portion initiale du lien provenant d'une source d'approvisionnement ; - un torsadeur rotatif disposé à la partie avant de l'appareil et pourvu de deux ouvertures pour l'engagement de deux parties de cette portion initiale ; - un système de coupe disposé en amont de l'une des ouvertures du torsadeur en considérant le sens de défilement du lien; - un guide pivotant disposé à l'extrémité avant dudit appareil et dont la sortie peut être amenée en regard de la deuxième ouverture du torsadeur ;
- des moyens moteurs et un système de transmission agencés pour être tour à tour actifs ou inactifs, de façon à réaliser, alternativement :
- soit l'actionnement des moyens d'entrainement, du guide pivotant et du système de coupe, pendant que le torsadeur rotatif est à l'arrêt ;
- soit l'entraînement en rotation dudit torsadeur rotatif, pendant que les moyens d'entraînement, le guide pivotant et le système de coupe sont désactivés.

Grâce à cet appareil, il est possible d'effectuer des ligatures torsadées, de manière très aisée et extrêmement rapide. Cet appareil permet de doubler, voire de tripler, le rendement des opérateurs préposés à l'attache de la vigne, par rapport aux techniques manuelles ou mécanisées pratiquées à ce jour. L'appareil selon l'invention permet,
en effet de poser entre 20 à 30 attaches par minute, une main tenant le pistolet attacheur pendant que l'autre main forme le bois d'attachage.

Selon une autre disposition caractéristique intéressante de l'invention, les moyens moteurs de l'appareil sont constitués par un unique moteur électrique à deux sens de rotation et le système de transmission comprend deux dispositifs d'embrayage agencés pour être alternativement actifs ou inactifs, l'un de ces dispositifs assurant la communication du mouvement moteur au système d'entraînement du lien, au guide pivotant et au système de coupe, pendant que l'autre ne transmet aucun mouvement moteur au torsadeur rotatif, et vice-versa.

Grâce à cet agencement, l'appareil est léger et peu encombrant.

Suivant une autre disposition caractéristique très intéressante de l'invention, l'appareil comporte un bec en forme de crochet disposé fixement à l'extrémité avant dudit appareil, ce bec crocheteur délimitant une ouverture autour de laquelle le guide pivotant est monté avec une aptitude de basculement.

Grâce à cette disposition, l'opérateur peut saisir un rameau ou sarment, au moyen du crochet avant fixe de l'appareil, l'amener au contact du fil de soutien et poser l'attache en appuyant seulement sur une gâchette commandant l'alimentation du moteur assurant le cycle complet de fonctionnement de l'appareil.

On comprend, que cet agencement facilite grandement l'action de rapprochement du sarment à proximité du fil de soutien, la pose des attaches pouvant s'opérer éventuellement à l'aide d'une seule main.

On comprend que grâce à l'invention, il est possible de réaliser une nouvelle génération d'appareils d'attachage, autonomes et portatifs, plus particulièrement avantageux pour les travaux d'attachage mécanique de la vigne, quelle que soit la technique de culture de cette dernière. Ces appareils dont le fonctionnement est motorisé et géré par un système électronique tel qu'un microprocesseur intégré à une carte électronique, par exemple logée dans la poignée de préhension de l'outil, permettent d'effectuer l'opération d'attache proprement dite en moins d'une seconde (0,2 seconde). L'appareil selon l'invention permet donc des gains de productivité extrêmement importants par la réduction du temps nécessaire pour l'exécution des travaux d'attachage. En outre, l'appareil selon l'invention se présente sous la forme d'un pistolet relativement léger (700 grammes environ) et facilement maniable, de sorte que les travaux d'attachage peuvent être réalisés avec moins de fatigue. Sa configuration permet une utilisation identique pour un gaucher et un droitier.

L'appareil attacheur selon l'invention est d'un emploi très facile et sa mise en oeuvre peut être simplifiée grâce une gestion électronique de l'ensemble de ses composants actifs. Cet appareil est rapidement exploitable, quelle que soit la personne qui l'utilise, car il ne nécessite aucune connaissance technique particulière.

L'ergonomie générale et l'esthétique industrielle de l'appareil procurent une revalorisation des travaux d'attache de la vigne ou autres plantes, précédemment fastidieux.

Le confort d'utilisation de l'appareil permet d'obtenir une cadence de travail régulière, quels que soient le moment de la journée (la fatigue de l'utilisateur est réduite) et les conditions météorologiques (pas de doigts gelés en fin de journée, l'opérateur pouvant travailler avec des gants).

Les buts, caractéristiques et avantages ci-dessus, et d'autres encore, ressortiront mieux de la description qui suit et des dessins annexés dans lesquels :
Les figures 1 et 2 sont des vues schématiques illustrant, à titre d'exemple, deux méthodes de culture et d'attache de la vigne propres à deux régions viticoles de France.

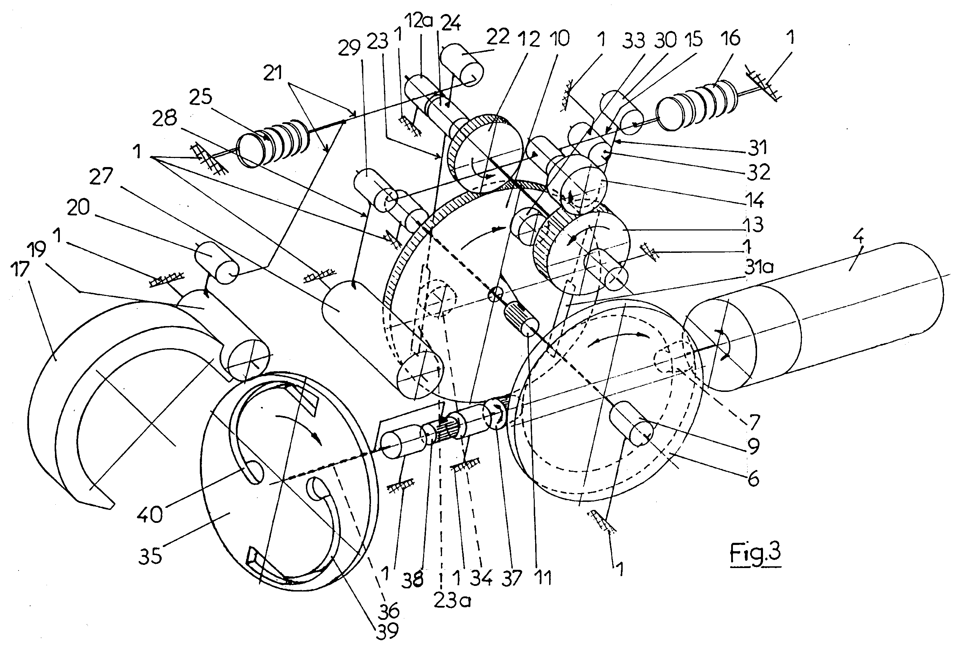

La figure 3 montre un schéma cinématique de l'appareil d'attache selon l'invention.

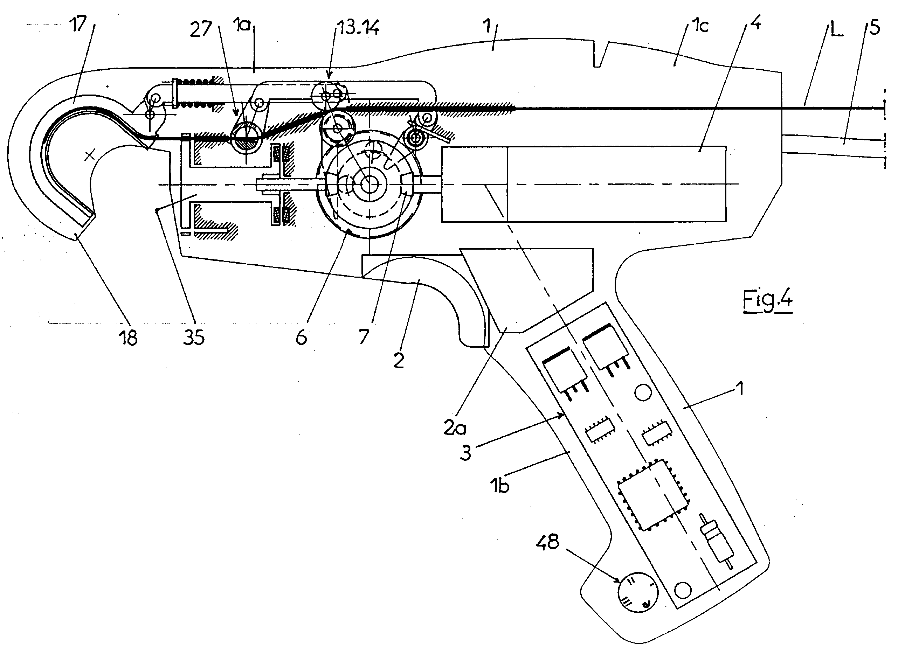

La figure 4 représente le schéma architectural d'un mode d'exécution automatisé de cet appareil.

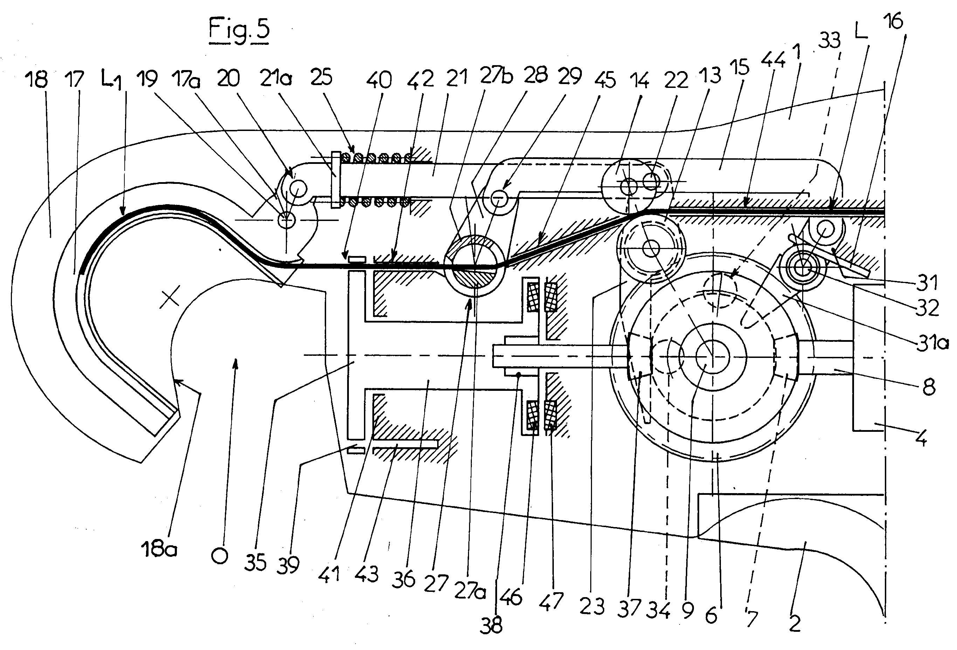

La figure 5 est une vue partielle et à plus grande échelle de la partie avant du pistolet attacheur représenté à la figure 4.

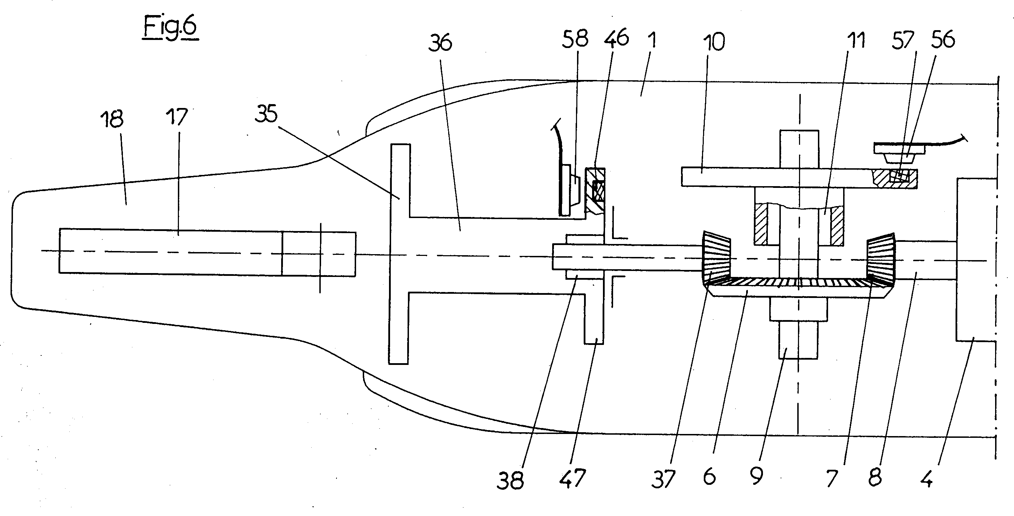

La figure 6 est une vue de dessus illustrant notamment le positionnement des dispositifs d'embrayage agencés pour être alternativement actifs, ou inactifs, selon le sens de rotation du motoréducteur.
La figure 7 est une vue de face et à plus grande échelle du crochet de guidage pivotant.
Les figures 8a, 8b, 8c sont des vues en coupe suivant les lignes a-a, b-b, c-c, respectivement, de la figure 7, chacune de ces vues montrant deux positions du lien.
La figure 9 est une vue en perspective éclatée du dispositif assurant la coupe du lien, en amont du torsadeur.
Les figures 10 et 11 sont deux vues en coupe transversales illustrant, respectivement, le défilement du lien à travers le système de coupe et le sectionnement de ce lien.
La figure 12 est une vue partielle et à plus grande échelle de la figure 4, montrant le crochet pivotant de l'appareil, en position d'ouverture, avant l'attachage d'un sarment sur un fil de soutien.
La figure 13 est une vue correspondant à la figure 12 et montrant le crochet en position de fermeture et la coupe de la portion initiale du lien, avant la torsade des extrémités de l'attache.
La figure 14 est une vue illustrant la fixation d'un sarment sur un fil de soutien, au moyen d'une attache réalisée par la mise en oeuvre de l'appareil selon l'invention.
La figure 15 est une vue de face illustrant le dispositif d'approvisionnement fournissant le lien utilisé pour la réalisation des attaches, et le positionnement de ce dispositif sur une ceinture.
La figure 16 est une vue en coupe suivant la ligne 16-16 de la figure 15.

On se réfère auxdits dessins pour décrire un exemple intéressant, bien que nullement limitatif, de réalisation de l'appareil d'attachage selon l'invention.

Suivant cet exemple d'exécution, l'appareil est avantageusement réalisé sous la forme d'un outil portatif ayant la forme générale d'un pistolet et comprenant un carter ou corps 1 comportant une partie la s'étendant vers l'avant et renfermant le mécanisme d'attache, une poignée creuse 1b munie d'une gâchette 2 permettant d'actionner un interrupteur 2a logé dans ladite poignée, cette dernière étant aménagée pour recevoir une carte électronique 3 de programmation du fonctionnement de l'appareil, et une partie postérieure 1c contenant les moyens moteurs d'entraînement de l'ensemble des organes actifs du mécanisme d'attache.

De manière avantageuse et selon une disposition caractéristique de l'invention, les moyens moteurs sont constitués par un unique motoréducteur électrique 4 à double sens de rotation et à courant continu. Ce motoréducteur peut, de préférence, être alimenté par des batteries rechargeables, par exemple des batteries de 12 volts ou de 24 volts, équipant une ceinture et reliées, au moyen d'un câble électrique 5, au motoréducteur 4.

L'appareil comprend des moyens d'entraînement et de guidage d'un lien filiforme L provenant d'une source d'approvisionnement. Cette source d'approvisionnement pourrait être constituée par une bobine positionnée dans une chambre aménagée à la partie postérieure du carter de l'outil. Toutefois, de manière préférée, et selon une disposition caractéristique de l'invention, la source d'approvisionnement comprend un boîtier rigide 50 équipant une ceinture 49 qui peut être avantageusement la même que celle qui porte les batteries d'alimentation du motoréducteur 4. Le boîtier 50 comporte un axe 51 permettant le montage rotatif d'une bobine 52 de lien L. Un moyen de freinage, par exemple constitué par un ressort 53 s'oppose à la libre rotation de la bobine 52 montée sur l'axe 51. Ce ressort agissant en compression peut être monté autour de l'axe 51 et calé, par l'intermédiaire de ses extrémités opposées, d'une part, contre la paroi interne du boîtier 50 et, d'autre part, contre une couronne de freinage 54 destinée à venir en appui contre la bobine 52 installée sur l'axe 51.

Grâce à cet agencement, le lien n'est pas déroulé par les moyens qui assurent son entraînement à l'intérieur de l'appareil, ou par des moyens spéciaux, ce déroulement résultant, en effet, des gestes de l'opérateur lorsqu'il tend le bras en direction des emplacements des attaches à poser.

Les batteries et la bobine de lien constituent un ensemble relativement léger (de l'ordre de 2,3 kg) qui peut être placé dans le dos de l'opérateur grâce à la ceinture 49 équipée de cet ensemble lequel peut assurer une autonomie d'attachage de plusieurs heures.

Dans l'application très intéressante à l'attache de la vigne ou autre plante, le lien est constitué par un fil de fer de petit diamètre enrobé de papier biodégradable ou de matière plastique (par exemple polypropylène). Le fil de fer assure la résistance, tandis que le papier ou la matière plastique évite l'étranglement de la végétation. Après un certain temps (environ 3 mois), l'enrobage se dégrade, le fil de fer constitué d'une matière très oxydante se couvre de rouille ; l'attache réalisée avec un tel lien se casse alors très facilement lorsqu'on procède à la taille manuelle ou lors du passage d'une prétailleuse. Ce lien se présente, par exemple, sous forme d'un fil plat d'une largeur de l'ordre de 3 à 4 mm et d'une épaisseur, en son centre où se trouve le fil métallique, de l'ordre de 0,5 mm.

Après son entrée dans le pistolet attacheur, par une ouverture ménagée à l'arrière du carter de ce dernier, la portion initiale L1 du lien L est entraînée vers l'avant dudit appareil, par des moyens d'entraînement et de guidage actionnés par le motoréducteur 4, par l'intermédiaire d'une transmission comprenant une roue à denture conique 6 en prise avec un pignon conique 7 calé sur l'arbre de sortie 8 dudit motoréducteur. Cette roue 6 est montée tournante sur un axe fixe 9 porté par le carter 1 et elle peut être accouplée à une roue dentée 10, par l'intermédiaire d'un premier dispositif d'embrayage qui peut être avantageusement constitué par une roue libre 11.

La roue dentée 10 est en prise avec un pignon 12 monté sur un axe fixe 12a et solidaire en rotation d'un galet coaxial 13.

Contre ce galet 13 peut être pressé un galet d'appui 14 rotation libre, monté dans la partie intermédiaire d'une biellette mobile 15. Un ressort 16 tend à rappeler la biellette 15 vers l'arrière, dans une position suivant laquelle le galet d'appui 14 se trouve pressé contre ledit pignon 13, le lien L passant entre lesdits galets 13 et 14.

L'un au moins des galets du couple de galets 13, 14 constituant les moyens d'entraînement du lien est muni d'une denture périphérique, le galet denté étant, de préférence, le galet moteur 13.

On conçoit que lorsque la roue dentée 6 se trouve accouplée à la roue dentée 10, par l'intermédiaire de la roue libre 11, elle entraine en rotation le pignon 12 et le galet 13, de sorte que ce dernier, en coopération avec le galet 14, assure l'entraînement du lien L en direction de l'extrémité avant de l'appareil.

On observe que lors du passage du lien L entre le galet d'appui 14 et le galet d'entraînement 13, les dents de ce dernier perforent le matériau d'enrobage (matière plastique ou papier) dudit lien, d'une multitude de petits trous, de façon qu'après pose des attaches, le fil de fer se trouvera en contact, par ces perforations, avec l'air et l'eau, ce qui favorisera son oxydation et sa dégradation ultérieures.

A la sortie du système d'entraînement 13-14, le lien L passe successivement dans un dispositif de coupe et dans l'une des ouvertures d'un torsadeur qui seront décrits dans la suite du présent exposé.

Le lien passe ensuite dans un guide pivotant 17 ayant la forme d'un crochet.

Selon une disposition intéressante de l'invention, l'extrémité avant du pistolet attacheur est munie d'un crochet ouvert fixe 18 qui peut être formé directement avec le carter 1 ou rapporté fixement à l'avant de celui-ci. Ce crochet ouvert fixe ou bec crocheteur 18 délimite partiellement, par son bord courbe interne 18a, une ouverture 0 et le guide pivotant 17 est monté avec une aptitude de basculement autour de cette ouverture. Le guide pivotant 17 est monté de manière à ce que son bord interne 17c se trouve à distance et à l'extérieur du bord interne 18a du crochet fixe 18, lorsque l'appareil est au repos, et à se rapprocher dudit bord de façon à fermer l'ouverture 0 lorsque ledit appareil est actionné.

Le guide 17 est monté avec une aptitude de basculement autour d'un axe fixe 19 et il est relié, par l'intermédiaire de sa partie postérieure en forme de levier 17a et d'une articulation 20, à l'une des extrémités d'une biellette 21 dont l'autre extrémité se trouve reliée, au moyen d'une articulation 22, à l'une des extrémités d'un levier 23 monté avec une possibilité de basculement autour d'un axe fixe 24.

Selon une disposition caractéristique de l'invention, le basculement du levier pivotant 17 en position de fermeture et de travail, est assuré par un ressort.

Suivant l'exemple de réalisation illustré, un ressort 25 agissant en compression est monté autour d'une portion antérieure de la biellette 21, ce ressort étant calé, par l'intermédiaire de ses extrémités opposées, d'une part, contre un point fixe du carter et, d'autre part, contre un collet 21a équipant la partie avant de la biellette 21, ce ressort tendant à exercer une poussée sur le levier 17a du guide-crochet basculant 17, c'est-à-dire à provoquer le pivotement dudit guide-crochet en position de fermeture.

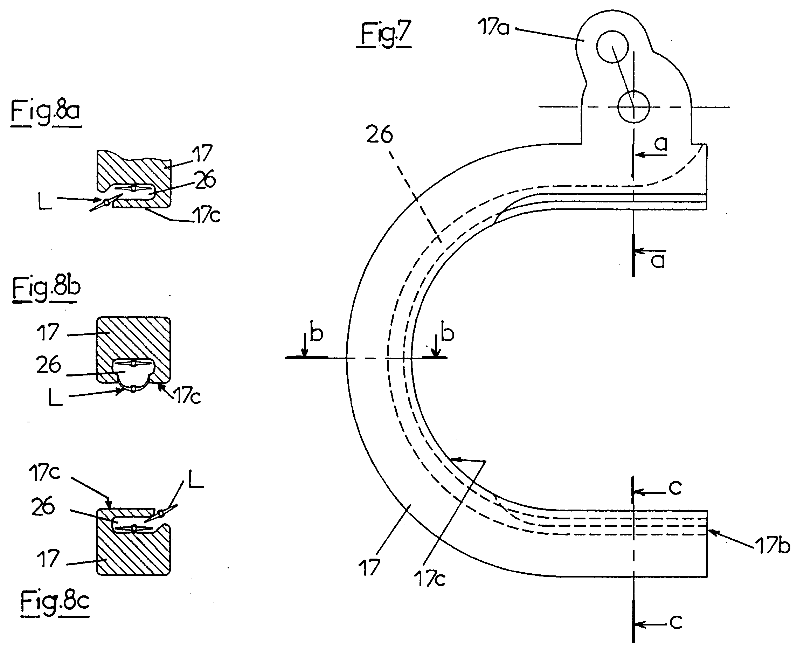

Le guide basculant est pourvu, dans sa surface courbe interne, d'une gorge de guidage 26 conformée pour retenir le lien, mais favorisant sa sortie, lors de l'action de torsadage. Le profil changeant de cette gorge 26 est illustré aux figures 8a, 8b, 8c. On voit, sur ces figures, que, dans la portion intermédiaire du guide pivotant en forme de crochet 17, la gorge 26 s'ouvre dans la partie médiane de la largeur de la surface courbe interne 17c dudit guide pivotant (figure 8b), tandis que, dans les portions extrêmes de ce dernier, ladite gorge s'ouvre latéralement et dans des directions opposées.

Le système de coupe est constitué par une guillotine rotative 27 comprenant un organe fixe 27a et un organe pivotant 27b entre lesquels peut défiler le lien L. L'organe fixe 27a remplit, par exemple, la fonction de contre-couteau, tandis que l'organe mobile 27b joue le rôle de couteau.

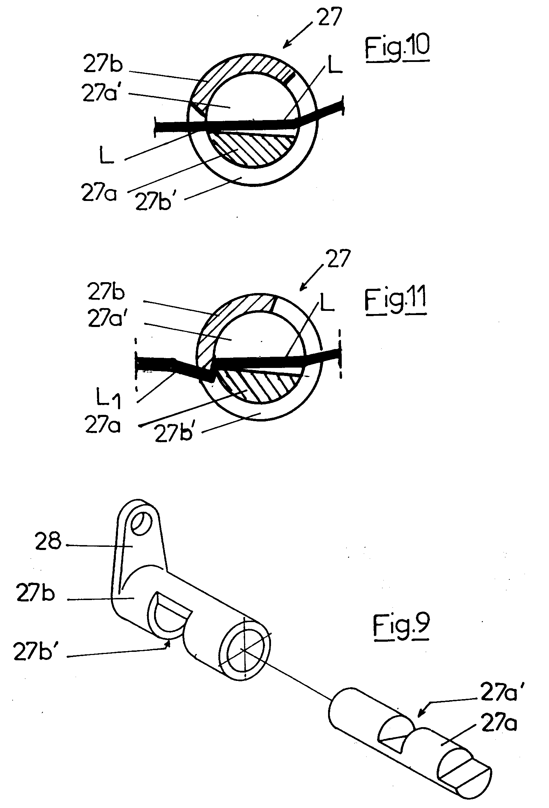

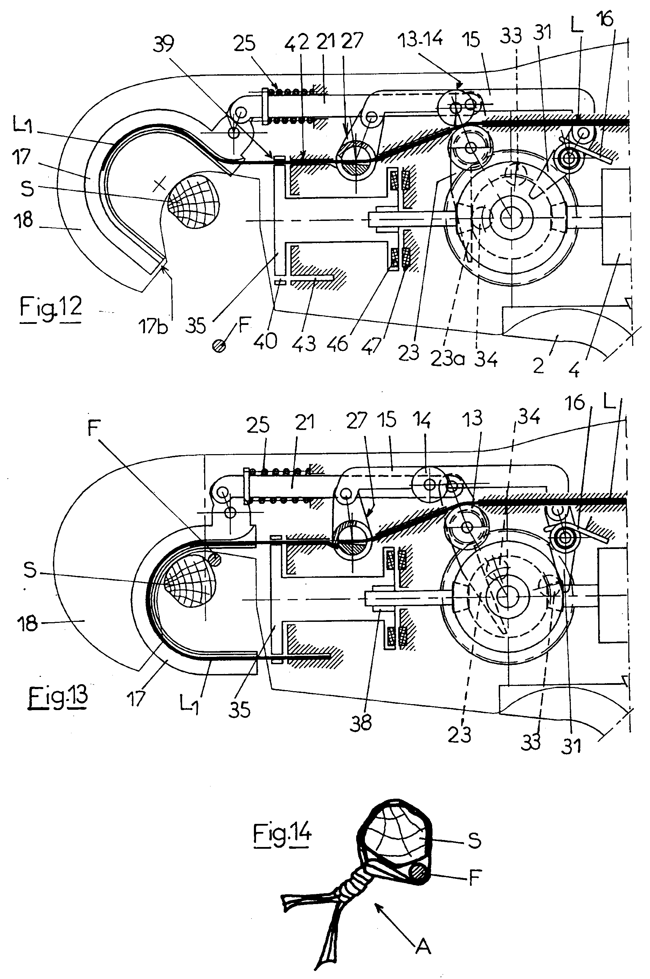

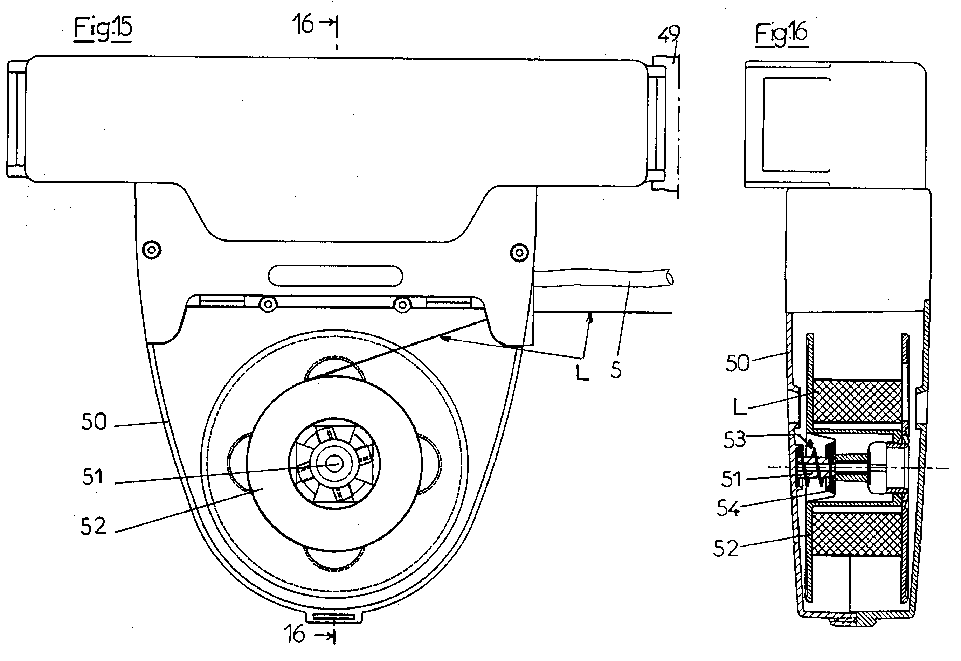

Comme le montrent notamment les figures 9 à 11, l'organe mobile 27b est monté avec une latitude de rotation d'amplitude limitée autour de l'organe fixe 27a. Ces organes ont une forme cylindrique et ils sont pourvus, latéralement, d'entailles 27b', 27a', respectivement, dont l'une au moins s'étend sur plus de 180 degrés. L'entaille 27a' ménagée dans le contre-couteau 27a s'étend, par exemple, sur environ 210 degrés, tandis que l'entaille 27b' que présente le couteau cylindrique 27b s'étend sur environ 245 degrés. Cette disposition favorise l'avancement du lien L à travers la guillotine 27, après sectionnement de sa portion initiale L1, comme on peut le voir sur la figure 11. En effet, le couteau rotatif 27b est susceptible d'occuper deux positions : une première position dans laquelle une lumière de passage du lien L se trouve ménagée à travers la guillotine 27 (figures 10 et 12) et une deuxième position dans laquelle un bord coupant de l'entaille 27b' coopère avec le bord voisin du contre-couteau 27a pour assurer le sectionnement du lien (figures 11 et 13). Dans cette position, l'espace ménagé entre les bords opposés de l'entaille 27b' et du contre-couteau 27a se trouve augmenté, ce qui favorise la progression de la nouvelle extrémité du lien à travers la guillotine lors du retour de cette dernière en position d'ouverture.

Le couteau pivotant 27b est rigidement solidaire d'un levier 28 relié, au moyen d'une articulation 29 à l'extrémité avant de la biellette 15 dont l'extrémité postérieure est reliée, au moyen d'une articulation 30, à un levier de manoeuvre 31 monté avec une aptitude de basculement autour d'un axe fixe 32.

Chacune des deux faces opposées de la roue dentée 10 est munie d'une came 33 ou 34 orientée parallèlement à l'axe de ladite roue.

La branche libre 31a du levier oscillant 31 d'actionnement de la biellette 15 est, par exemple, placée sur la trajectoire de la came 33, tandis que la branche libre 23a du levier oscillant 23 est disposée sur la trajectoire de la came 34.

Les cames 33 et 34 sont, par exemple, angulairement espacées de l'ordre de 95 degrés, pour permettre au lien L d'alimenter le guide basculant 17 en temps masqué.

Le torsadeur 35 se présente sous la forme d'un disque plat et il est solidaire d'un arbre axial 36 orienté vers l'arrière et relié à un pignon 37 en prise avec la roue dentée 6, par l'intermédiaire d'un deuxième dispositif d'embrayage qui peut être avantageusement constitué par une roue libre 38.

Les axes du torsadeur 35, de la roue libre 38 et du pignon 37 sont, de préférence, alignés avec les axes du motoréducteur 4 et du pignon moteur 7.

On conçoit que suivant le sens de rotation du motoréducteur, la roue libre 38 autorise ou non la rotation du torsadeur 35.

Le torsadeur 35 comporte deux ouvertures 39 et 40 et sa face interne se trouve disposée à très faible distance (par exemple de l'ordre de 1 mm) de la face plane d'une partie fixe 41 du corps ou carter 1 de l'appareil. L'une de ces ouvertures peut être placée en regard d'un passage 42 ménagé dans la partie fixe 41, en correspondance avec la sortie du dispositif de coupe, tandis que l'autre ouverture peut être disposée face à un trou borgne 43 également ménagé dans la partie fixe 41. Le passage 42 et le trou 43 sont disposés parallèlement à l'axe de rotation du torsadeur 35 et ils sont disposés de manière diamétralement opposée par rapport audit axe.

Les ouvertures 39 et 40 sont disposées symétriquement. Elles ont une forme allongée et courbe qui tend à se rapprocher du centre du torsadeur 35, en considérant le sens de rotation de ce dernier, l'utilité de cette conformation spiralée étant expliquée par la suite.

Des passages de guidage 44, 45 du lien L, sont de préférence ménagés dans le corps ou carter 1 de l'appareil entre, d'une part, l'entrée du lien et le dispositif d'entraînement 13, 14 et, d'autre part, ledit dispositif d'entraînement et le système de coupe à guillotine 27.

La gorge 26, les passages 42, 44, 45 et le trou 43 ont une section correspondant à la section du lien utilisé, c'est-à-dire, selon l'exemple illustré, une section rectangulaire correspondant à la conformation plate du lien L.

Un système d'indexation magnétique assure le positionnement correct du torsadeur 35, lorsque la roue libre 38 permettant l'entrainement en rotation dudit torsadeur est inactive. Ce système d'indexation comprend au moins un premier aimant équipant le torsadeur et un second aimant positionné fixement sur une partie fixe du corps de l'appareil. Selon le mode d'exécution illustré, la partie postérieure 55 du torsadeur, qui présente la forme d'un disque, est munie de deux aimants 46, diamétralement opposés, tandis que deux autres aimants 47 sont installés fixement sur une partie fixe du corps de l'appareil, en regard de la trajectoire des aimants 46, de sorte que lorsque la roue libre 38 est à l'état "libre", lesdits aimants rotatifs 46 viennent se placer face aux aimants fixes 47, en assurant ainsi le positionnement correct du torsadeur.

Le fonctionnement de l'outil est entièrement géré par la carte à microprocesseur 3 logée dans la poignée 1b de l'appareil, par exemple par l'intermédiaire d'un pont de puissance intégré à 4 transistors MOSFET.

Deux microcapteurs, par exemple du type "à effet Hall" permettent de déterminer les positions du torsadeur et l'avance du lien. Cette information transmise au microprocesseur permet à celui-ci de contrôler complètement le cycle de fonctionnement.

Un premier microcapteur 56 est par exemple disposée à proximité de la roue dentée 10 munie d'aimants 57. D'autre part, un deuxième microcapteur 58 est placé à proximité de la partie postérieure en forme de disque 55 du torsadeur 35, laquelle est munie d'au moins un aimant dont la trajectoire passe devant ledit aimant. De manière préférée, le microcapteur peut coopérer, dans ce but, avec les aimants 46 assurant le positionnement correct du torsadeur.

La carte à microprocesseur 3 assure également les sécurités, par exemple limitation du courant (moyenne et crêtes). Elle permet d'adapter le fonctionnement de l'appareil aux caractéristiques du courant électrique fourni par les batteries (12 volts ou 24 volts) ; elle assure aussi la remise en position de départ si un arrêt est intervenu durant le cycle. Un disjoncteur peut cependant remplacer la limitation en courant assurée par la carte à microprocesseur, ce disjoncteur à déclenchement en courant pouvant être placé sur l'alimentation du moteur. La carte à microprocesseur permet également de modifier le nombre de tours du torsadeur, au gré de l'opérateur qui peut souhaiter un attachage plus ou moins serré. Dans ce but, l'appareil peut être équipé d'un programmateur ou sélecteur 48 à plusieurs positions, accessible sur la poignée de l'appareil, ce programmateur permettant de sélectionner rapidement le nombre de tours de la torsade.

Après rapprochement des éléments à ligaturer (par exemple sarment de vigne S et fil de soutien F) au moyen du crochet fixe 18 de l'appareil, le cycle de fonctionnement de celui-ci comprend les phases suivantes :
- fermeture du crochet 18 ;
- avance du lien L jusqu'à sa pénétration dans le trou 43, après avoir traversé la seconde ouverture du torsadeur 35 ;
- coupe du lien L ;
- torsade de la portion de lien sectionnée L1 ;
- avancement d'une nouvelle portion initiale du lien dans le guide basculant 17, jusqu'à proximité de l'extrémité libre de ce dernier ;
- réouverture du crochet 18.

On décrit ci-après ce fonctionnement de manière plus détaillée.

Au repos (figure 12), le crochet 17-18 est ouvert, le guide basculant 17 se trouvant entièrement logé dans le volume délimité par les parois du crochet fixe 18. La portion initiale L1 du lien L se trouve engagée dans le guide basculant 17, l'extrémité libre de ladite portion se trouvant à proximité de l'extrémité libre 17b dudit guide basculant. La came 34 appuie sur la branche libre 23a du levier 23, de sorte que la biellette 21 se trouve en position de recul, tandis que le ressort 25 est comprimé. D'autre part, le système d'indexation magnétique 46-47 maintient le torsadeur 35 dans une position suivant laquelle les ouvertures 39, 40 de celui-ci se trouvent placées en regard du passage 42 et du trou 43.

Lorsqu'on appuie sur la gâchette 2, le cycle démarre.

Le motoréducteur 4 tourne dans le sens permettant l'actionnement des moyens d'entrainement du lien et du système de coupe.

La came 34 de la roue dentée 10 s'éloigne de sa position initiale et permet le pivotement du levier 23 et l'avancement de la biellette 21 sous l'action du ressort 25 lequel assure le pivotement du guide 17 et la fermeture du crochet 17-18 autour du sarment S et du fil de soutien F.

On remarque que l'utilisation d'un ressort (ressort 25) convenablement taré pour obtenir la fermeture du crochet 17-18, permet d'éviter de blesser le sarment si celui-ci se trouve malencontreusement sur la trajectoire du guide-crochet 17.

Le lien L est entrainé par l'intermédiaire du pignon 7, de la roue dentée 6, de la roue libre 11, de la roue dentée 10, du pignon 12, du galet denté 13 et du galet d'appui 14 pressé contre ledit galet denté par l'action du ressort 16 agissant sur le levier basculant 31 et la biellette 15.

Le lien L avance au travers du système de coupe à guillotine 27, de l'une des ouvertures 39 ou 40 du torsadeur 35 et jusqu'au guide-crochet pivotant 17. On observe que, durant cette phase, le torsadeur reste placé dans la position souhaitable grâce au dispositif d'indexation magnétique 46, 47.

Le lien L termine sa course pour traverser la seconde ouverture 40 ou 39 du torsadeur 35 et s'engager dans le trou borgne 43. A cet instant, la came 33 de la roue dentée 10 rencontre la branche libre 31a du levier oscillant 31 et provoque le basculement de ce levier à l'encontre de l'action antagoniste du ressort 16. Le basculement du levier 31 entraine :
- par l'intermédiaire de la biellette 15, l'éloignement du galet d'appui 14 et, par conséquent, le désaccouplement des organes 13, 14 du système d'avancement du lien ;
- par l'intermédiaire de ladite biellette 15 et du levier 28, la rotation du couteau 27b du système de coupe à guillotine 27 assurant le sectionnement de la portion initiale L1 du lien L, ladite portion initiale détachée L1 constituant la future attache A (figure 13).

On observe que durant cette phase du cycle, la roue libre 11 est active, tandis que la roue libre 38 est à l'état "libre" ou inactif.

A la fin de cette phase, le motoréducteur change de sens de rotation, la roue libre 11 passe à l'état "libre" ou inactif, tandis que la roue libre 38 devient active. Le passage à l'état "libre" de la roue libre 11, entraine la désactivation du système d'avance 13-14, de la guillotine 27 et du guide-crochet 17.

Le torsadeur 35 se trouve entraîné en rotation par l'intermédiaire du pignon 7, de la roue dentée 6, du pignon 37 et de la roue libre 38. Un comptage du nombre de tours est opéré par la carte à micro-processeur à partir des informations transmises par le microcapteur 58, afin de serrer la torsade autour du sarment S et du fil de soutien F. Le nombre de tours peut être réglé à tout moment par l'opérateur, au moyen du sélecteur 48, afin d'obtenir un serrage optimal de l'attache.

On observe que grâce à la forme étudiée des ouvertures 39, 40 du torsadeur 35, les deux brins extrêmes de la portion de lien sectionnée L1 sont d'abord rapprochés tout en étant pressés entre la face postérieure dudit torsadeur et la face plane de la partie fixe 41, ce qui favorise le processus de torsade.

Après exécution de la torsade, le motoréducteur 4 change de nouveau de sens de rotation.

La came 33 de ladite roue libère le levier 31 permettant, par l'intermédiaire du ressort 16, le rappel du galet d'appui 14 contre le galet dentée 13 et l'ouverture du système de coupe à guillotine 27, de sorte qu'une nouvelle portion initiale du lien se trouve avancée en direction du guide basculant 17 jusqu'au voisinage de l'extrémité libre 17b dudit guide. La came 34 de la roue dentée 10 vient ensuite basculer le levier 23 assurant le pivotement du guide 17 et l'ouverture du crochet 17-18, à l'encontre de l'action antagoniste du ressort 25. L'appareil est prêt pour l'exécution d'une nouvelle attache.

On a précédemment décrit une application particulièrement intéressante de l'invention à l'attachage de la vigne, mais il est évident que le pistolet attacheur selon l'invention peut trouver de nombreuses autres applications dans lesquelles il peut s'avérer souhaitable de poser des attaches pour solidariser deux ou plus de deux éléments ou pour resserrer une partie d'un objet (fermeture de sacs par exemple).

## Revendications

1. Appareil pour la pose d'attaches, par exemple pour l'attachage de la vigne, caractérisé en ce qu'il comprend : - des moyens (13, 14) pour l'entraînement d'une portion initiale (L1) d'un lien filiforme (L) provenant d'une source d'approvisionnement (52) ; - un torsadeur rotatif (35) disposé à la partie avant (1a) de l'appareil et pourvu de deux ouvertures (39, 40) pour l'engagement de deux parties de cette portion initiale ; - un système de coupe (27) disposé en amont de l'une des ouvertures (39, 40) du torsadeur (35) en considérant le sens de défilement du lien (L) ; - un guide pivotant (17) muni d'une gorge de guidage (26) et disposé à l'extrémité avant dudit appareil et dont la sortie (17b) peut être amenée en regard de la deuxième ouverture du torsadeur ; - des moyens moteurs (4) et un système de transmission (6, 7, 10, 11, 37, 38) agencés pour être tour à tour actifs ou inactifs, de façon à réaliser, alternativement :
- soit l'actionnement des moyens d'entrainement (13, 14), du guide pivotant (17) et du système de coupe (27), pendant que le torsadeur rotatif (35) est à l'arrêt ;
- soit l'entrainement en rotation dudit torsadeur rotatif (35) pendant que les moyens d'entrainement (13, 14), le guide pivotant (17) et le système de coupe (27) sont désactivés.

2. Appareil selon la revendication 1, caractérisé en ce que les moyens moteurs de l'appareil comprennent un unique moteur électrique (4) à deux sens de rotation, et en ce que le système de transmission comprend deux dispositifs d'embrayage (11, 38) agencés pour être alternativement actifs ou inactifs, l'un (11) de ces dispositifs assurant la communication du mouvement moteur au système d'entrainement (13, 14) du lien (L), au guide pivotant (17) et au système de coupe (27), pendant que l'autre (38) ne transmet aucun mouvement moteur au torsadeur rotatif (35), et vice-versa.

3. Appareil selon l'une des revendications 1 ou 2, caractérisé en ce qu'il comporte un bec en forme de crochet (18) disposé fixement à l'extrémité avant dudit appareil, ce bec crocheteur (18) délimitant une ouverture (0) autour de laquelle le guide pivotant (17) est monté avec une aptitude de basculement.

4. Appareil suivant l'une des revendications 1 ou 2, caractérisé en ce que les dispositifs d'embrayage (11, 38) sont constitués par des roues libres.

5. Appareil selon la revendication 1, caractérisé en ce que le basculement du guide pivotant (17) en position de fermeture et de travail est réalisé par un ressort (25).

6. Appareil suivant la revendication 1, caractérisé en ce que les moyens d'entraînement comprennent un couple de galet (13, 14) dont l'un (13) au moins, est moteur et muni d'une denture périphérique qui permet, à la fois, l'entrainement du lien (L) et la perforation de l'enrobage de celui-ci.

7. Appareil selon l'une des revendications 1 ou 2, caractérisé en ce qu'une partie fixe (41) du corps (1) dudit appareil est munie de deux passages parallèles (42, 43) dont l'un (42) est placé en correspondance avec la sortie du système de coupe, ces passages étant orientés parallèlement à l'axe de rotation du torsadeur (35) et disposés de manière diamétralement opposée par rapport audit axe, les ouvertures (39, 40) dudit torsadeur étant agencées de manière à pouvoir être placées face auxdits passages (42, 43).

8. Appareil selon l'une des revendications 1 ou 2, caractérisé en ce que le système de coupe (27) est constitué par une guillotine rotative (27) comportant un organe fixe (27a), par exemple constitué par un contre-couteau et un organe rotatif (27b) monté avec une aptitude de rotation d'amplitude limitée autour dudit organe fixe et constituant, par exemple, un couteau, ledit organe rotatif étant susceptible d'occuper deux positions : - une première position dans laquelle une lumière de passage du lien (L) se trouve ménagée à travers la guillotine (27) et, - une deuxième position selon laquelle deux bords de l'organe fixe (27a) et de l'organe mobile (27b) coopèrent pour effectuer le sectionnement dudit lien (L).

9. Appareil suivant l'une des revendications 3 ou 5, caractérisé en ce que le guide pivotant (17) est monté de manière à ce qu'il se trouve entièrement logé dans le volume délimité par les parois du crochet fixe (18), lorsque l'appareil est au repos.

10. Appareil selon l'une des revendications 1 ou 7, caractérisé en ce que les ouvertures (39, 40) du torsadeur rotatif (35) ont une forme allongée et courbe qui tend à se rapprocher du centre dudit torsadeur, en considérant le sens de rotation de ce dernier.

11. Appareil suivant l'une quelconque des revendications 1, 7 ou 10, caractérisé en ce que la face postérieure du torsadeur (35) est disposée à faible distance d'une face plane d'une partie fixe (41) du corps (1) dudit appareil.

12. Appareil selon l'une des revendications 6 ou 8, caractérisé en ce que le système de transmission comprend une roue dentée (10) entraînée en rotation par l'un (11) des dispositifs d'embrayage (11, 38), cette roue dentée étant en prise avec le galet moteur (13) du couple de galets (13, 14) assurant l'avancement du lien (L), ladite roue dentée étant munie, sur chacune de ses faces opposées, d'une came (33, 34), ces cames étant angulairement décalées et agissant, l'une (33), sur un dispositif de désactivation des moyens d'avancement (13, 14) du lien (L) et d'actionnement du système de coupe à guillotine (27), et l'autre (34), sur un dispositif d'ouverture du crochet (17, 18).

13. Appareil suivant la revendication 12, caractérisé en ce que le dispositif de désactivation des moyens d'avancement (13, 14) du lien (L) et d'actionnement du système de coupe à guillotine (27) comprend : un levier basculant (31) dont l'un des bras (31a) est placé sur la trajectoire de l'une (33) des cames (33, 34) de la roue dentée (10) et relié, au moyen d'une articulation (30), à l'une des extrémités d'une biellette (15) portant, dans sa partie intermédiaire, l'un (14) des galets du couple de galets (13, 14) d'avancement du lien (L), et reliée, par son extrémité opposée et au moyen d'une articulation (29), à un levier (28) solidaire en rotation du couteau rotatif (27b) du système de coupe à guillotine (27), un ressort (16) rappelant ledit levier basculant (31) et ladite biellette (15) dans une position suivant laquelle lesdits galets (13, 14) assurent l'avancement du lien (L) et le système de coupe à guillotine (27) autorise le défilement de ce dernier.

14. Appareil selon l'une des revendications 12 ou 13, caractérisé en ce que le dispositif d'ouverture du crochet (17, 18) comprend un levier basculant (23) dont l'un des bras (23a) est placé sur la trajectoire de l'une (34) des cames (33, 34) de la roue dentée (10), ce levier étant relié au moyen d'une articulation (22), à une biellette (21) elle-même reliée, par l'intermédiaire de son extrémité opposée et au moyen d'une articulation (20), à un levier (17a) solidaire du guide basculant (17).

15. Appareil suivant la revendication 14, caractérisé en ce que le ressort (25) assurant le basculement du guide pivotant (17) en position de fermeture, est monté autour d'une portion antérieure de la biellette (21) et calé, par l'intermédiaire de ses extrémités opposées, d'une part, contre un point fixe du carter ou corps de l'appareil et, d'autre part, contre un collet (21a) équipant ladite portion antérieure.

16. Appareil selon l'une quelconque des revendications 12 à 14, caractérisé en ce que le décalage angulaire des cames (33, 34) de la roue dentée (10) est prévu de manière que les moyens d'entrainement (13, 14) du lien (L) soient actionnés avant les moyens (23) assurant le basculement du guide pivotant (17) en position d'ouverture et de repos, de façon qu'une partie de la portion initiale (L1) dudit lien, soit avancée dans ledit guide pivotant (17) avant l'ouverture du crochet (17-18).

17. Appareil selon l'une quelconque des revendications 1, 2, 4, 7, ou 10, caractérisé en ce qu'il comprend un système d'indexation magnétique (46, 47) assurant le positionnement correct du torsadeur (35), lorsque le dispositif d'embrayage (38) permettant l'entraînement en rotation dudit torsadeur se trouve à l'état inactif.

18. Appareil suivant la revendication 17, caractérisé en ce que ledit système d'indexation magnétique comprend, d'une part, au moins un aimant (46) équipant la partie postérieure du torsadeur (35), et, d'autre part, au moins un aimant (47) positionné fixement sur une partie fixe du corps (1) dudit appareil.

19. Appareil selon l'une quelconque des revendications 1 à 18, caractérisé en ce qu'il comprend une carte à microprocesseur (3) assurant la gestion du cycle de fonctionnement complet dudit appareil, cette carte à microprocesseur (3) étant, de préférence, logée dans la poignée (1b) de ce dernier.

20. Appareil suivant la revendication 19 et l'une quelconque des revendications 12 à 16, caractérisé en ce qu'il comporte des microcapteurs (56, 58), de préférence des microcapteurs "à effet Hall", reliés à la carte à microprocesseur (3) et permettant de déterminer les positions du torsadeur (35) et l'avance du lien (L), l'un (56) de ces microcapteurs étant par exemple disposé en regard de la trajectoire d'aimants (57) dont est munie la roue dentée (10) actionnant les moyens d'entraînement du lien (13, 14), tandis que le second (58) desdits microcapteurs est, par exemple, disposé en regard de la trajectoire d'au moins un aimant (46) dont est pourvue la partie postérieure (55) du torsadeur (35).

21. Appareil selon l'une des revendications 19 ou 20, caractérisé en ce qu'il comprend un programmateur ou sélecteur (48) à plusieurs positions, par exemple accessible sur la poignée (1b) dudit appareil et permettant de régler le nombre de tour de la torsade des attaches.

22. Appareil selon l'une quelconque des revendications 1, 6, 12 ou 13, comportant des moyens pour la réception d'une bobine (52) de lien (L), caractérisé en ce que ces moyens sont constitués par un boîtier (50) fixé sur une ceinture (49) et pourvu d'un axe (51) pour la réception de ladite bobine, ledit boîtier étant muni d'un dispositif de freinage (53, 54) s'opposant à la libre rotation de la bobine (52) positionnée sur ledit axe (51).

## Claims

1. Device for the placement of fasteners, for example for tying vines, characterised in that it comprises: means (13, 14) for driving along an initial portion (L1) of a wire-shaped tie (L) coming from a supply source (52); a rotary twister (35) disposed in the front part (1a) of the device and provided with two openings (39, 40) for the engagement of two parts of said initial portion; a cutting system (27) disposed upstream, in the direction in which the tie (L) is unwound, of one of the openings (39, 40) in the twister (35); a swivelling guide (17) equipped with a cannelure (26) and disposed at the front end of said device, and the outlet (17b) of which can be brought opposite the second opening in the twister; motive means (4) and a transmission system (6, 7, 10, 11, 37, 38) which are arranged so as to be in turn active or inactive, in such a way as to alternatively bring about:
- either the actuation of the driving means (13, 14), the swivelling guide (17) and the cutting system (27), whilst the rotary twister (35) is inoperative;
- or the rotation of said rotary twister (35) whilst the driving means (13, 14), the swivelling guide (17) and the cutting system (27) are disabled.

2. Device according to claim 1, characterised in that the motive means of the device comprise a single electric motor (4) with two directions of rotation, and in that the transmission system comprises two clutch mechanisms (11, 38) arranged so as to be alternatively active or inactive, one (11) of these mechanisms ensuring that the motive motion is communicated to the driving system (13, 14) for the tie (L), to the swivelling guide (17) and to the cutting system (27), whilst the other (38) transmits no motive motion to the rotary twister (35), and vice versa.

3. Device according to either of claims 1 and 2, characterised in that it has a hook-shaped nose (18) fixedly disposed on the front end of said device, said hooking nose (18) delimiting an opening (0) around which the swivelling guide (17) is mounted in a manner enabling it to swing.

4. Device according to either of claims 1 and 2, characterised in that the clutch mechanisms (11, 38) are constituted by free wheels.

5. Device according to claim 1, characterised in that the swivelling guide (17) is swung into the closed operating position by a spring (25).

6. Device according to claim 1, characterised in that the driving means comprise a pair of rollers (13, 14), at least one (13) of which is motive and provided with peripheral toothing which at the same time allows the tie (L) to be driven along and the casing thereof to be pierced.

7. Device according to either of claims 1 and 2, characterised in that a fixed part (41) of the body (1) of said device is provided with two parallel passages (42, 43), of which one (42) is positioned in correspondence with the outlet of the cutting system, these passages being orientated parallel to the rotational axis of the twister (35) and arranged in a diametrically opposed manner with respect to said axis, the openings (39, 40) in said twister being arranged in a manner enabling them to be positioned facing said passages (42, 43).

8. Device according to either of claims 1 and 2, characterised in that the cutting system (27) is constituted by a rotary guillotine (27) having a fixed element (27a), for example constituted by a blade backplate, and a rotary element (27b) mounted so as to rotate with limited amplitude about said fixed element and for example constituting a blade, said rotary element being adapted to assume two positions: a first position in which a passing slot in the tie (L) is located through the guillotine (27), and a second position whereby two edges of the fixed element (27a) and of the movable element (27b) cooperate in order to cut said tie (L) into pieces.

9. Device according to either of claims 3 and 5, characterised in that the swivelling guide (17) is mounted in such a way that it is entirely accommodated in the volume delimited by the walls of the fixed hook (18) when the device is at rest.

10. Device according to either of claims 1 and 7, characterised in that the openings (39, 40) in the rotary twister (35) have an elongate curved shape which tries to draw near to the centre of said twister, seen in the direction of rotation of the latter.

11. Device according to any one of claims 1, 7 and 10, characterised in that the bottom face of the twister (35) is arranged a short distance from a plane face of a fixed part (41) of the body (1) of said device.

12. Device according to either of claims 6 and 8, characterised in that the transmission system comprises a toothed wheel (10) driven in rotation by one (11) of the clutch mechanisms (11, 38), said toothed wheel being meshed with the driving roller (13) of the pair of rollers (13, 14) which cause the tie (L) to advance, said toothed wheel being provided, on each of its opposing faces, with a cam (33, 34), these cams being angularly offset and one of them (33) operating a device which disables the means (13, 14) for advancing the tie (L) and for actuating the guillotine cutting system (27), and the other (34) operating on a hook opening device (17, 18).

13. Device according to claim 12, characterised in that the device for disabling the means (13, 14) for advancing the tie (L) and for actuating the guillotine cutting system (27) comprises: a rocking lever (31), of which one of the arms (31a) is positioned on the path of one (33) of the cams (33, 34) of the toothed wheel (10) and connected by means of a joint (30) to one of the ends of a rocker bar (15) which in its intermediate part carries one (14) of the rollers of the pair of rollers (13, 14) advancing the tie (L), and is connected, by its opposite end and by means of a joint (29), to a lever (28) constrained to rotate with the rotary blade (27b) of the guillotine cutting system (27), a spring (16) returning said rocking lever (31) and said rocker bar (15) into a position whereby said rollers (13, 14) ensure that the tie (L) advances and the guillotine cutting system (27) allows the latter to unwind.

14. Device according to either of claims 12 and 13, characterised in that the hook opening device (17, 18) comprises a rocking lever (23) of which one of the arms (23a) is positioned on the path of one (34) of the cams (33, 34) of the toothed wheel (10), this lever being connected by means of a joint (22) to a rocker bar (21) which in turn is connected, via its opposite end and by means of a joint (20), to a lever (17a) constrained to move with the swinging guide (17).

15. Device according to claim 14, characterised in that the spring (25) which causes the swivelling guide (17) to swing into the closure position is mounted around a frontal portion of the rocker bar (21) and wedged, via its opposing ends, on the one hand against a fixed point of the housing or body of the device and, on the other hand, against a flange (21a) exhibited by said frontal portion.

16. Device according to any one of claims 12 to 14, characterised in that the angular offset of the cams (33, 34) of the toothed wheel (10) is designed to ensure that the driving means (13, 14) for the tie (L) are actuated before the means (23) causing the swivelling guide (17) to swing into the open rest position, thereby causing part of the initial portion (L1) of said tie to advance in said swivelling guide (17) before the hook (17-18) opens.

17. Device according to any one of claims 1, 2, 4, 7 and 10, characterised in that it includes a magnetic indexing system (46, 47) which ensures that the twister (35) is in the correct position whenever the clutch mechanism (38) which allows said twister to be driven in rotation is in the inactive state.

18. Device according to claim 17, characterised in that said magnetic indexing system has, on the one hand, at least one magnet (46) fitted to the bottom part of the twister (35) and, on the other hand, at least one magnet (47) positioned fixedly on a fixed part of the body (1) of said device.

19. Device according to any one of claims 1 to 18, characterised in that it includes a microprocessor board (3) which controls the complete operating cycle of said device, said microprocessor board (3) preferably being housed in the handle (1b) thereof.

20. Device according to claim 19 and any one of claims 12 to 16, characterised in that it has microsensors (56, 58), preferably Hall effect microsensors, connected to the microprocessor board (3) and enabling the positions of the twister (35) and the forward movement of the tie (L) to be determined, one (56) of said microsensors being for example arranged facing the path of magnets (57) fitted to the toothed wheel (10) which actuates the tie driving means (13, 14), whereas the second (58) of said microsensors is, for example, arranged facing the path of at least one magnet (46) with which the bottom part (55) of the twister (35) is provided.

21. Device according to either of claims 19 and 20, characterised in that it includes a multi-position programmer or selector (48), for example accessible on the handle (1b) of said device and making it possible to control the number of turns with which the fasteners are twisted.

22. Device according to any one of claims 1, 6, 12 and 13, having means for receiving a tie (L) spool (52), characterised in that these means are constituted by a casing (50) fixed on a belt (40) and provided with a shaft (51) to take said spool, said casing being equipped with a braking device (53, 54) opposing the free rotation of the spool (52) positioned on said shaft (51).

## Patentansprüche

1. Vorrichtung zum Anbringen von Befestigungen, beispielsweise zum Festbinden von Weinstöcken, dadurch gekennzeichnet, daß sie umfaßt: - Mittel (13, 14) für die Mitnahme eines Anfangsabschnitts (L1) eines drahtförmigen Verbindungselements (L), das von einer Zulieferquelle (52) stammt; - eine Drehverwürgeeinrichtung (35), die am vorderen Teil (1a) des Geräts angeordnet und mit zwei Öffnungen (39, 40) für den Eingriff von zwei Teilen dieses Anfangsabschnitts versehen ist;
- ein Schneidesystem (27), das in bezug auf die Abspulrichtung des Verbindungselements (L) vor einer der Öffnungen (39, 40) der Drehverwürgeeinrichtung (35) angeordnet ist; - eine schwenkbare Führung (17), die mit einer Führungsrille (26) ausgestattet und an dem Ende vor dem Gerät angeordnet ist und deren Ausgang (17b) relativ zu der zweiten Öffnung der Drehverwürgeeinrichtung positioniert werden kann; - Motormittel (4) und ein Übersetzungssystem (6, 7, 10, 11, 37, 38), die so ausgelegt sind, daß sie abwechselnd aktiv oder inaktiv sind, um alternativ
- entweder die Betätigung der Mitnahmemittel (13, 14), der schwenkbaren Führung (17) und des Schneidesystems (27) auszuführen, während sich die Drehverwürgeeinrichtung (35) im Ruhezustand befindet;
- oder den Drehantrieb der Drehverwürgeeinrichtung (35) zu bewerkstelligen, während die Mitnahmemittel (13, 14), die schwenkbare Führung (17) und das Schneidesystem (27) deaktiviert sind.

2. Vorrichtung nach Anspruch 1, dadurch gekennzeichnet, daß die Motormittel der Vorrichtung einen einzigen Elektromotor (4) mit zwei Drehrichtungen umfassen, und dadurch, daß das Übersetzungssystem zwei Kupplungseinrichtungen (11, 38) umfaßt, die für einen abwechselnd aktiven und inaktiven Zustand ausgelegt sind, wobei eine dieser Einrichtungen die Übertragung der Motorbewegung zum Mitnahmesystem (13, 14) des Verbindungselements (L), zur schwenkbaren Führung (17) und zum Schneidesystem (27) sicherstellt, während die andere (38) keine Motorbewegung zu der Drehverwürgeeinrichtung (35) überträgt, und umgekehrt.

3. Vorrichtung nach einem der Ansprüche 1 oder 2, dadurch gekennzeichnet, daß sie einen hakenförmigen Schnabel (18) aufweist, der fest an dem Ende vor der Vorrichtung angeordnet ist, wobei dieser Hakenschnabel (18) eine Öffnung (0) begrenzt, um die herum die schwenkbare Führung (17) kippbar montiert ist.

4. Vorrichtung nach einem der Ansprüche 1 oder 2, dadurch gekennzeichnet, daß die Kupplungseinrichtungen (11, 38) aus Freilaufrädern gebildet sind.

5. Vorrichtung nach Anspruch 1, dadurch gekennzeichnet, daß das Kippen der schwenkbaren Führung (17) in geschlossener Position und in Arbeitsposition mittels einer Feder (25) ausgeführt wird.

6. Vorrichtung nach Anspruch 1, dadurch gekennzeichnet, daß die Mitnahmemittel ein Paar von Walzen (13, 14) umfassen, von denen mindestens eine (13) motorisch bewegt wird und mit einer umlaufenden Verzahnung versehen ist, die gleichzeitig die Mitnahme des Verbindungselements (L) und die Perforierung von dessen Ummantelung ermöglicht.

7. Vorrichtung nach einem der Ansprüche 1 oder 2, dadurch gekennzeichnet, daß ein fester Teil (41) des Körpers (1) der Vorrichtung mit zwei parallel verlaufenden Durchführungen (42, 43) versehen ist, wovon eine (42) in Übereinstimmung mit dem Ausgang des Schneidesystems positioniert ist, wobei diese Durchführungen parallel zur Drehachse der Drehverwürgeeinrichtung (35) ausgerichtet und in bezug auf diese Achse diametral entgegengesetzt angeordnet sind, wobei die Öffnungen (39, 40) der Drehverwürgeeinrichtung so gestaltet sind, daß sie den Durchführungen (42, 43) gegenüberliegend positioniert werden können.

8. Vorrichtung nach einem der Ansprüche 1 oder 2, dadurch gekennzeichnet, daß das Schneidesystem (27) aus einer Drehschneideeinrichtung (27), die ein festes Organ (27a) enthält, das beispielsweise von einem Gegenmesser gebildet ist, und einem sich drehenden Organ (27b) gebildet ist, das mit eingeschränktem Ausschlag drehbar um das feste Organ herum montiert ist und beispielsweise ein Messer bildet, wobei das sich drehende Organ zwei Positionen einnehmen kann: - eine erste Position, in der eine Durchführungsöffnung für das Verbindungselement (L) durch die Schneideinrichtung (27) ausgespart ist, und - eine zweite Position, in der die beiden Kanten des festen Organs (27a) und des sich drehenden Organs (27b) zusammenwirken, um das Durchtrennen des Verbindungselements (L) zu bewirken.

9. Vorrichtung nach einem der Ansprüche 3 oder 5, dadurch gekennzeichnet, daß die schwenkbare Führung (17) so montiert ist, daß sie vollständig in dem von den Wänden des festen Hakens (18) begrenzten Raum gelagert ist, wenn sich die Vorrichtung im Ruhezustand befindet.

10. Vorrichtung nach einem der Ansprüche 1 oder 7, dadurch gekennzeichnet, daß die Öffnungen (39, 40) der Drehverwürgeeinrichtung (35) eine längliche und gekrümmte Form aufweisen, die sich unter Berücksichtigung ihrer Drehrichtung zur Mitte der Drehverwürgeeinrichtung hin annähert.

11. Vorrichtung nach einem der Ansprüche 1, 7 oder 10, dadurch gekennzeichnet, daß die rückwärtige Fläche der Drehverwürgeeinrichtung (35) in geringer Entfernung zu einer ebenen Fläche eines festen Teils (41) des Körpers (1) der Vorrichtung angeordnet ist.

12. Vorrichtung nach einem der Ansprüche 6 oder 8, dadurch gekennzeichnet, daß das Übersetzungssystem ein Zahnrad (10) umfaßt, das von einer (11) der Kupplungseinrichtungen (11, 38) in eine Drehbewegung versetzt wird, wobei dieses Zahnrad in die motorgetriebene Walze (13) des Walzenpaars (13, 14) eingreift und damit den Vorschub des Verbindungselements (L) sicherstellt, wobei das Zahnrad an jeder seiner gegenüberliegenden Flächen mit einer Nocke (33, 34) ausgestattet ist, wobei diese Nocken zueinander im Winkel versetzt sind und wobei die eine (33) auf eine Deaktivierungseinrichtung der Vorschubmittel (13, 14) des Verbindungselements (L) und eine Aktivierungseinrichtung des Schneidesystems (27) und die andere (34) auf eine Einrichtung zum Öffnen des Hakens (17, 18) wirkt.

13. Vorrichtung nach Anspruch 12, dadurch gekennzeichnet, daß die Deaktivierungseinrichtung der Vorschubmittel (13, 14) des Verbindungselements (L) und die Aktivierungseinrichtung des Schneidesystems (27) umfassen: einen Kipphebel (31), dessen einer Arm (31a) auf der Bahn einer (33) der Nocken (33, 34) des Zahnrads (10) positioniert ist und mittels eines Gelenks (30) mit einem der Enden eines Schwingarms (15) verbunden ist, der in seinem Mittelteil eine (14) der Walzen des Vorschubwalzenpaars (13, 14) des Verbindungselements (L) trägt und über sein entgegengesetztes Ende und mittels eines Gelenks (29) mit einem Hebel (28) verbunden ist, der in der Drehung einstückig ist mit dem Drehmesser (27b) des Schneidesystems (27), wobei eine Feder (16) den Kipphebel (31) und den Schwingarm (15) in eine Position zurückholt, in der die Walzen (13, 14) den Vorschub des Verbindungselements (L) sicherstellen und das Schneidesystem (27) dessen Abspulen zuläßt.

14. Vorrichtung nach einem der Ansprüche 12 oder 13, dadurch gekennzeichnet, daß die Öffnungseinrichtung des Hakens (17, 18) einen Kipphebel (23) umfaßt, dessen einer Arm (23a) auf der Bahn einer (34) der Nocken (33, 34) des Zahnrads (10) positioniert ist, wobei dieser Hebel mittels eines Gelenks (22) mit einem Schwingarm (21) verbunden ist, der wiederum über sein entgegengesetztes Ende und mittels eines Gelenks (20) mit einem Hebel (17a) verbunden ist, der mit der schwenkbaren Führung (17) einstückig ist.

15. Vorrichtung nach Anspruch 14, dadurch gekennzeichnet, daß die Feder (25), welche das Kippen der schwenkbaren Führung (17) in eine geschlossene Position sicherstellt, um einen vor dem Schwingarm (21) liegenden Abschnitt herum montiert und an ihren gegenüberliegenden Enden einerseits gegen einen festen Punkt auf dem Gehäuse oder Körper der Vorrichtung und andererseits gegen einen Kragen (21a) verkeilt ist, mit dem der davorliegende Abschnitt versehen ist.

16. Vorrichtung nach einem der Ansprüche 12 bis 14, dadurch gekennzeichnet, daß der Winkelversatz der Nocken (33, 34) des Zahnrads (10) so vorgesehen ist, daß die Mitnahmemittel (13, 14) des Verbindungselements (L) vor denjenigen Mitteln (23) in Gang gesetzt werden, die das Kippen der schwenkbaren Führung (17) in die Öffnungs- und Ruheposition sicherstellen, so daß ein Teil des Anfangsabschnitts (L1) des Verbindungselements vor dem Öffnen des Hakens (17-18) einen Vorschub in die schwenkbare Führung (17) erfährt.

17. Vorrichtung nach einem der Ansprüche 1, 2, 4, 7 oder 10, dadurch gekennzeichnet, daß es ein magnetisches Kennzeichnungssystem (46, 47) umfaßt, das die richtige Positionierung der Drehverwürgeeinrichtung (35) sicherstellt, während sich die Kupplungseinrichtung (38), die den Drehantrieb der Drehverwürgeeinrichtung ermöglicht, in inaktivem Zustand befindet.

18. Vorrichtung nach Anspruch 17, dadurch gekennzeichnet, daß das magnetische Kennzeichnungssystem einerseits mindestens einen Magneten (46) umfaßt, mit dem der rückwärtige Teil der Drehverwürgeeinrichtung (35) ausgestattet ist, und andererseits mindestens einen Magneten (47), der fest auf einem feststehenden Teil des Körpers (1) der Vorrichtung positioniert ist.

19. Vorrichtung nach einem der Ansprüche 1 bis 18, dadurch gekennzeichnet, daß sie eine Mikroprozessorplatine (3) enthält, die die Steuerung des gesamten Betriebsablaufes der Vorrichtung ermöglicht, wobei diese Mikroprozessorplatine (3) vorzugsweise im Handgriff der Vorrichtung untergebracht ist.

20. Vorrichtung nach Anspruch 19 und einem der Ansprüche 12 bis 16, dadurch gekennzeichnet, daß sie Mikrosensoren (56, 58) enthält, vorzugsweise "Halleffekt"-Mikrosensoren, die mit der Mikroprozessorplatine (3) verbunden sind und die Bestimmung der Positionen der Drehverwürgeeinrichtung (35) sowie des Vorschubs des Verbindungselements (L) ermöglichen, wobei einer (56) dieser Mikrosensoren beispielsweise gegenüber der Bahn der Magneten (57) angeordnet ist, mit denen das Zahnrad (10) ausgestattet ist, das die Mitnahmemittel des Verbindungselements (13, 14) in Gang setzt, während der zweite (58) der Mikrosensoren beispielsweise gegenüber der Bahn von mindestens einem Magneten (46) angeordnet ist, mit dem der rückwärtige Teil (55) der Drehverwürgeeinrichtung (35) ausgestattet ist.

21. Vorrichtung nach einem der Ansprüche 19 oder 20, dadurch gekennzeichnet, daß sie ein Programmschaltwerk oder eine Auswahleinrichtung (48) mit mehreren Positionen enthält, auf die beispielsweise auf dem Handgriff (1b) des Geräts zugegriffen werden kann und mit der die Anzahl der Verdrehungen der Verwürgung der Befestigungen eingestellt werden kann.

22. Vorrichtung nach einem der Ansprüche 1, 6, 12 oder 13, umfassend Mittel zur Aufnahme einer Spule (52) mit dem Verbindungselement (L), dadurch gekennzeichnet, daß diese Mittel aus einem Gehäuse (50) gebildet sind, das auf einem Gurt (49) befestigt und mit einer Achse (51) zur Aufnahme der Spule ausgestattet ist, wobei das Gehäuse mit einer Bremseinrichtung (53, 54) ausgerüstet ist, die der freien Rotation der auf der Achse (51) positionierten Spule (52) entgegenwirkt.
